(19) Europäisches Patentamt
European Patent Office
Office européen des brevets

(11) **EP 1 806 391 A1**

(12) **EUROPEAN PATENT APPLICATION**
published in accordance with Art. 158(3) EPC

(43) Date of publication:
**11.07.2007 Bulletin 2007/28**

(51) Int Cl.:
*C10M 171/00* (2006.01)     *C10M 125/02* (2006.01)
*C10M 129/28* (2006.01)     *C10M 147/00* (2006.01)
*C10M 155/02* (2006.01)     *C10M 159/06* (2006.01)
*C10M 169/06* (2006.01)     *B60B 35/18* (2006.01)
*F16C 33/66* (2006.01)     *C10M 115/08* (2006.01)
*C10N 20/00* (2006.01)     *C10N 20/02* (2006.01)
*C10N 30/00* (2006.01)     *C10N 30/06* (2006.01)
*C10N 40/02* (2006.01)     *C10N 50/10* (2006.01)

(21) Application number: **05795825.8**

(22) Date of filing: **18.10.2005**

(86) International application number:
**PCT/JP2005/019143**

(87) International publication number:
**WO 2006/043566 (27.04.2006 Gazette 2006/17)**

(84) Designated Contracting States:
**DE FR GB**

(30) Priority: **18.10.2004 JP 2004302805**
          **18.10.2004 JP 2004302841**
          **18.10.2004 JP 2004303000**
          **18.10.2004 JP 2004303249**
          **19.10.2004 JP 2004304599**

(71) Applicants:
• **NSK Ltd.**
**Tokyo 141-8560 (JP)**
• **KYODO YUSHI CO., LTD.**
**Tokyo 104-0061 (JP)**

(72) Inventors:
• **NAKATANI, Shinya,**
**c/o NSK Ltd.**
**Fujisawa-shi, Kanagawa 251-8501 (JP)**
• **KURAISHI, Jun,**
**c/o NSK Ltd.**
**Fujisawa-shi, Kanagawa 251-8501 (JP)**
• **MATSUMOTO, Tomoaki,**
**c/o NSK Ltd.**
**Fujisawa-shi, Kanagawa 251-8501 (JP)**

(74) Representative: **Grünecker, Kinkeldey,**
**Stockmair & Schwanhäusser**
**Anwaltssozietät**
**Maximilianstrasse 58**
**80538 München (DE)**

(54) **WATERPROOF GREASE COMPOSITION AND ROLLER BEARING FOR WHEEL SUPPORT**

(57) The waterproof grease composition of the present application comprises a base oil that comprises at least one of mineral oil and synthetic oil and having a kinematic viscosity of from 10 to 400 $mm^2$/sec at 40°C, a thickener, and a waterproofness-imparting agent selected from surfactant, metal soap, fluorine-containing water repellent, silicone-type water repellent, pH-controlling agent, wax, polymer and graphite. Accordingly, it may prevent peeling such as white structure peeling even when water is mixed therein.

The wheel-supporting roller bearing of the invention comprises an inner member having a raceway surface in the outer peripheral surface thereof, an outer member having, in the inner peripheral surface thereof, a raceway surface that faces the raceway surface of the inner member and disposed outside the inner member, and plural rolling elements rollably disposed between the two raceway surfaces, and which contains the above waterproof grease composition sealed therein; and this has excellent waterproofness.

FIG. 1

**Description**

TECHNICAL FIELD

The present invention relates to a waterproof grease composition, as well as to a wheel-supporting roller bearing that is for rotatably supporting a wheel to a suspension in motorcars, railroad cars, etc.

BACKGROUND ART

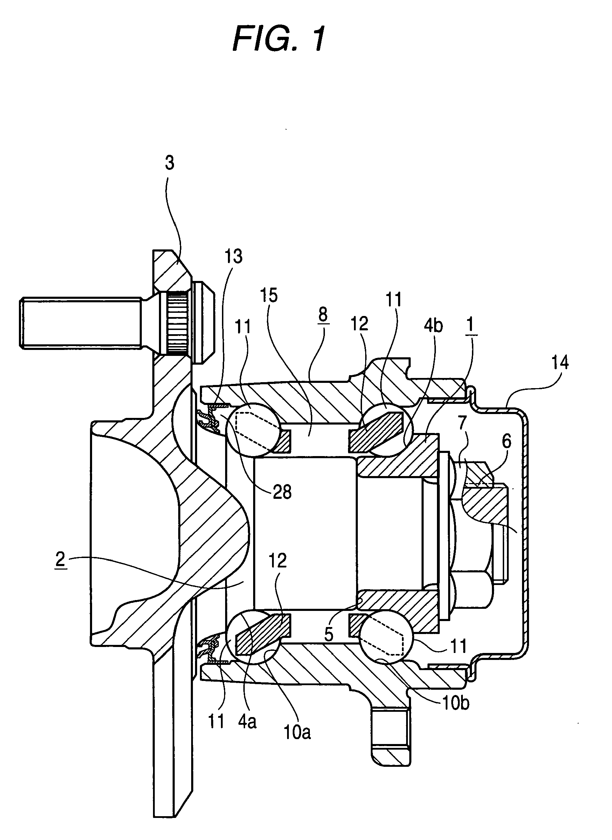

In motorcars and railroad cars, used is a wheel-supporting roller bearing that is for rotatably supporting a wheel to a suspension. A hub unit is much used as a wheel-supporting roller bearing, and Fig. 1 shows its one example. In this hub unit, an outside flange 3 for fixing a wheel (not shown) is formed on the outer peripheral surface of the outer edge (the left-side edge in the drawing) of the hub 2 that constitutes an inner ring-corresponding part along with an inner ring element 1; and on the outer peripheral surface of the middle part, formed are an inner raceway 4a and a step 5. On the outer peripheral surface adjacent to the inner edge of the middle part of the hub 2 (the right side in the drawing), the inner ring element 1 with an inner raceway 4b similarly formed on its outer peripheral surface is outer-fitted and supported in such a condition that its outer edge surface (the left-side edge in the drawing) is kept butting against the step 5.

A male screw 6 is formed adjacent to the inner edge of the hub 2, and a nut 7 is screwed to the top of the male screw 6, and tightly clamped, whereby the inner ring element 1 is fixed at the predetermined part of the outer peripheral surface of the hub 2. Further, on the outer peripheral surface of the middle part of the outer ring 8 disposed around the hub 2, provided is an outer flange-shaped fixer 9 for fixing the outer ring 8 to a suspension (not shown).

On the inner peripheral surface of the outer ring 8, formed are outer raceways 10a and 10b that face the inner raceways 4a and 4b, respectively. Between the inner raceways 4a, 4b and the outer raceways 10a, 10b, plural rolling elements 11, 11 are provided thereby enabling the rotation of the hub 2 inside the outer ring 8. The rolling elements 11, 11 are individually rollably held by their holders 12, 12, respectively.

Between the inner peripheral surface of the outer edge of the outer ring 8 and the outer peripheral surface of the hub 2, disposed is a seal ring 13 formed of an elastic material such as a nitrile rubber composition; and the seal ring 13 seals up the outside edge opening 28 of a space 15 that exists between the inner peripheral surface of the outer ring 8 and the outer peripheral surface of the hub 2 and the inner ring element 1 and has the rolling elements 11, 11 provided therein. Further, the inner end (the right-side end in the drawing) opening of the outer ring 8 is sealed up with a cover 14 for preventing impurities such as dust or rainwater from invading into the space 15 via the inner end opening and for preventing the grease (not shown) filled in the space 15 from leaking out.

In a passenger car, a multiple ball bearing unit as shown in the drawing is used; but in a large-sized vehicle, used is a multiple tapered roller bearing unit where a tapered roller is used as the rolling element 11 in Fig. 1. In a railroad car, often used is a multiple cylindrical roller bearing unit where a cylindrical roller is used as the rolling element 11, in addition to the similar multiple tapered roller bearing unit.

On the other hand, a sealing grease is required to be waterproof, since a hub unit is brought into contact with rainwater or water in washing it. When water is mixed in a sealing grease it may unevenly exist in the three-dimensional structure of the thickener in the grease, thereby breaking the structure with the result that the grease may be softened and the softened grease may flow out and its adhesiveness may lower, after all causing lubricity failure. Moreover, when large-size water droplets exist in the grease, then they may cut off the formed lubricant film, thereby augmenting the lubricity failure.

As an improved grease so as not to soften and fluidize with water, proposed is a grease with a metal phenate or a metal stearate added thereto (for example, see Patent Reference 1). However, the grease of the type has poor dispersibility of water taken therein and there is room for improvement of its adhesiveness.

When water is mixed in a sealing grease, then it is known that the grease greatly shortens a bearing life; and for example, Komura et al. report that, when 6 % water is mixed in a lubricant oil (#180 turbine oil), then a rolling fatigue life lowers to from one-severalth to 1/20 of that in a case with no water mixing (Kyozaburo Komura, Shinichi Shirota, Kiyoshi Hirakawa; Regarding rolling fatigue at surface starting point and inner starting point, NSK Bearing Journal, No. 636, pp. 1-10, 1977). Schatzberg et al. report that, when only 100 ppm water is mixed in a lubricant oil, then its steel rolling strength lowers by from 32 to 48 % (P. Schatzberg, I. M. Felsen: Effects of water and oxygen during rolling contact lubrication, Wear, 12, pp. 331-342, 1968). The shortening of life may be considered because hydrogen may be generated by the mixed water to act on a bearing material thereby causing metal peeling, often referred to as white structure peeling.

For preventing such white structure peeling, a lot of improved sealing greases are proposed. For example, proposed are a grease with a passivate oxidizing agent such as sodium nitrite added thereto (for example, see Patent Reference 2); a grease with an organic antimony compound or an organic molybdenum compound added thereto (for example, see Patent Reference 3); and a grease with an inorganic compound having a particle size of at most 2 $\mu$m added thereto (for example, see Patent Reference 4). These form the additive-derived coating film around a rolling contact part to thereby prevent hydrogen from invading into a bearing material; but when a rolling element is slid as it is shaken or its speed is changed before the film is formed, then metal peeling may occur in the rolling contact part.

In addition, when water is mixed in a grease, then the shearing stability of the grease may lower and the grease may flow out though a lubricated site. As a grease of which the shearing stability is improved when it contains water, proposed are a grease with a metal phenate added thereto (for example, see Patent Reference 5); and a grease with a calcium or magnesium salt of a fatty acid added thereto (for example, see Patent Reference 6). However, these greases have another problem in that their lubricating capability lowers.

These greases are made to be repellent to water in order that they may hardly catch water. When a grease that is fluidized or stirred is brought into contact with water and when it is hydrophilic, then water may be taken in the grease as fine droplets therein. As opposed to it, when a grease is repellent to water, then water may be taken in the grease as large droplets therein, and further may exist unevenly therein. As a result, an oily film formed on the slide surface of a lubricated site may be partly removed, and lubrication failure may occur, starting from that part. In that manner, even when a water-repellent grease does not flow out from a lubricated site and a large amount of it exists in the site, such is not always advantageous for lubrication performance.

Friction occurs between the tires of a car and a road surface and static electricity is generated between them; and water is electrolyzed by the static electricity to form hydrogen ions, thereby causing white structure peeling. Accordingly, a conductive material such as conductive carbon black or metal powder, or an organic metal salt is added to a grease thereby to make it conductive (for example, see Patent Reference 7 and Patent Reference 8). At first, the conductive grease of the type may sufficiently exist on the contact surface between the raceway surface of the raceway and the rolling element of a roller bearing, and the conductivity between the raceway and the rolling element may be well ensured by the carbon black in the conductive grease; but with the lapse of time, the conductive grease may be expelled from the contact surface or the chain structure of the carbon black particles may be broken, thereby often producing a phenomenon that the conductivity of the grease lowers and the bearing resistance increases with time.

As measures except for the sealing grease, proposed are use of stainless steel for a bearing material (for example, see Patent Reference 9); and use of a rolling element formed of a ceramic (for example, see Patent Reference 10). However, those bearings are generally expensive.

Patent Reference 1: JP-B-2-8639
Patent Reference 2: Japanese Patent 2878749
Patent Reference 3: JP-A-6-803565
Patent Reference 4: JP-A-9-169989
Patent Reference 5: JP-B-2-8639
Patent Reference 6: JP-B-3-26717
Patent Reference 7: Japanese UM Registration 2559158
Patent Reference 8: JP-A-3-35091
Patent Reference 9: JP-A-3-173747
Patent Reference 10: JP-A-4-244624

DISCLOSURE OF THE INVENTION

PROBLEMS TO BE SOLVED BY THE INVENTION

The present invention is made in consideration of the situation as above, and its object is to provide a grease composition of excellent waterproofness, of which the adhesiveness does not lower even when water is mixed therein, which has excellent softening and flowing-out resistance and may keep a stable lubricant film and which may prevent peeling such as white structure peeling. In addition, another object of the invention is to provide a wheel-supporting roller bearing of excellent waterproofness, which contains the grease composition sealed therein.

MEANS FOR SOLVING THE PROBLEMS

To attain the above objects, the invention provides the following waterproof grease composition and wheel-supporting roller bearing:

(1) A waterproof grease composition including:

a base oil that includes at least one of mineral oil and synthetic oil and has a kinematic viscosity of from 10 to 400 $mm^2$/sec at 40°C,

a thickener, and
a waterproofness-imparting agent to be added.

(2) The waterproof grease composition of above (1), wherein
a surfactant is added as the waterproofness-imparting agent (this is hereinafter referred to as "the first waterproof grease composition").
(3) The first waterproof grease composition, wherein
at least one of cationic surfactant, anionic surfactant and ampholytic surfactant is added in a ratio of from 0.1 to 10 % by mass of the overall grease amount, or
a nonionic surfactant is added in a ratio of from 0.3 to 10 % by mass of the overall grease amount.
(4) The waterproof grease composition of above (1), wherein
at lest one of metal soap, fluorine-containing water repellent and silicone-type water repellent is added as the waterproofness-imparting agent, in a ratio of from 0.1 to 20 % by mass of the overall grease amount (this is hereinafter referred to as "the second waterproof grease composition").
(5) The waterproof grease composition of above (1), wherein
a pH-controlling agent is added as the waterproofness-imparting agent, in a ratio of from 0.1 to 10 % by mass of the overall grease amount (this is hereinafter referred to as "the third waterproof grease composition").
(6) The third waterproof grease composition, having a pH of from 7 to 10.
(7) The waterproof grease composition of above (1), wherein
a wax or polymer is added as the waterproofness-imparting agent, in a ratio of from 0.1 to 10 % by mass of the overall grease amount (this is hereinafter referred to as "the fourth waterproof grease composition").
(8) The waterproof grease composition of above (1), wherein
graphite is added as the waterproofness-imparting agent, in a ratio of from 1 to 20 % by mass of the overall grease amount (this is hereinafter referred to as "the fifth waterproof grease composition").
(9) The first to fifth waterproof grease composition, wherein
the thickener is a urea compound.
(10) A wheel-supporting roller bearing including:

an inner member having a raceway surface in the outer peripheral surface thereof,
an outer member having, in the inner peripheral surface thereof, a raceway surface that faces the raceway surface of the inner member and disposed outside the inner member, and
plural rolling elements rollably disposed between the two raceway surfaces, wherein
the above first to fifth waterproof grease composition is sealed therein.

(11) The wheel-supporting roller bearing of above (10), which is a hub unit.

EFFECT OF THE INVENTION

Owing to the waterproofness-imparting agent added thereto, the waterproof grease composition of the invention prevents peeling such as white structure peeling even when water is mixed in the site to which it is applied, and exhibits excellent durability.
The wheel-supporting roller bearing of the invention has excellent waterproofness, as containing the waterproof grease composition sealed therein.

BRIEF DESCRIPTION OF THE DRAWINGS

[Fig. 1]
Fig. 1 is a partly cut cross-sectional view showing one example of a hub unit bearing, as the wheel-supporting roller bearing.
[Fig. 2]

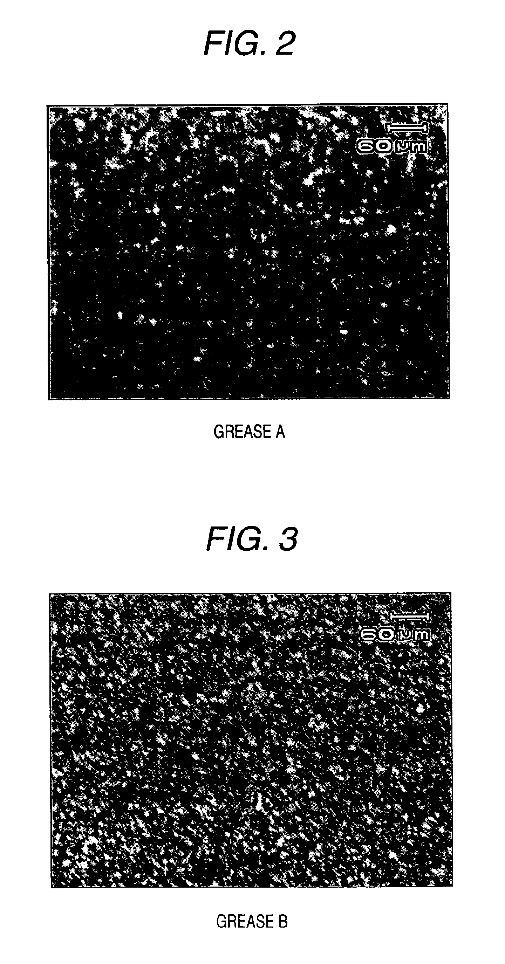

Fig. 2 is a picture, taken with a camera, of a condition of water in a test grease A in wet Shell Roll Test-1.
[Fig. 3]
Fig. 3 is a picture, taken with a camera, of a condition of water in a test grease B in wet Shell Roll Test-1.
[Fig. 4]

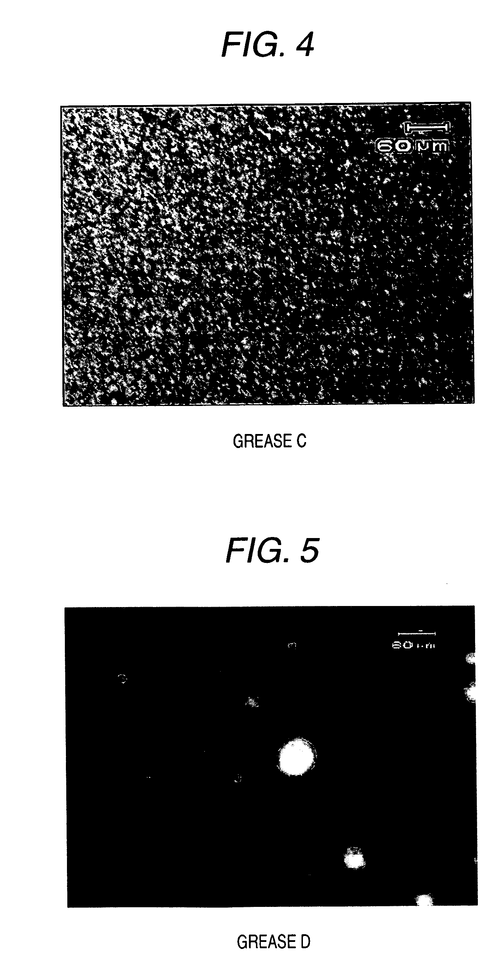

Fig. 4 is a picture, taken with a camera, of a condition of water in a test grease C in wet Shell Roll Test-1.
[Fig. 5]

Fig. 5 is a picture, taken with a camera, of a condition of water in a test grease D in wet Shell Roll Test-1.
[Fig. 6]

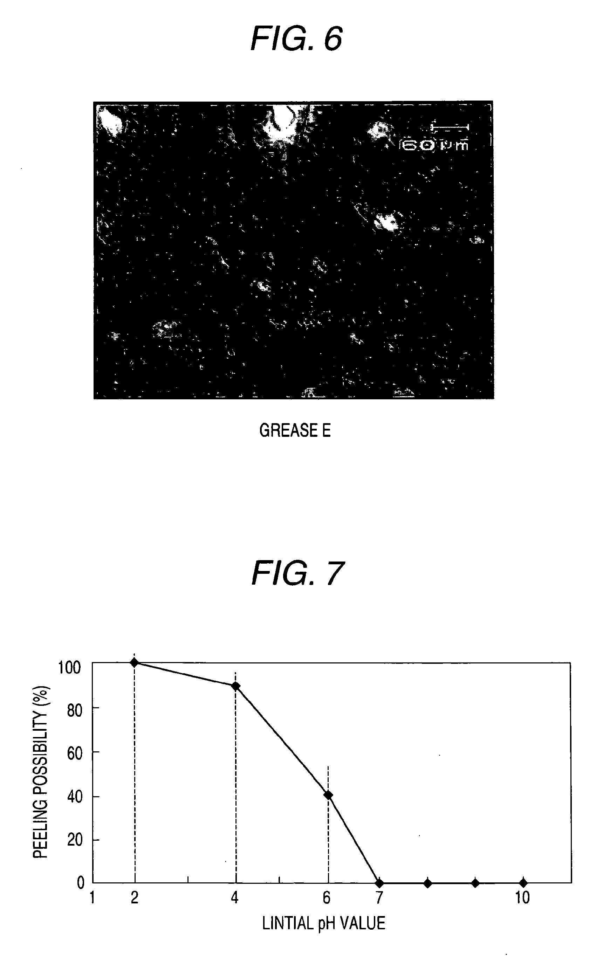

Fig. 6 is a picture, taken with a camera, of a condition of water in a test grease E in wet Shell Roll Test-1.
[Fig. 7]
Fig. 7 is a graph showing the relationship between the initial pH value and the peeling possibility in Test-3.

DESCRIPTION OF REFERENCE NUMERALS

| 1 | inner ring element |
|---|---|
| 2 | hub |
| 4a, 4b | inner raceway |
| 5 | step |
| 6 | male screw |
| 7 | nut |
| 8 | outer ring |
| 10a, 10b | outer raceway |
| 11 | rolling element |
| 12 | holder |
| 13 | seal ring |

BEST MODE FOR CARRYING OUT THE INVENTION

The invention is described in detail hereinunder.

The first to fifth waterproof grease compositions of the invention contain a specific waterproofness-imparting agent added to a base grease that comprises a base oil and a thickener.

The base oil is selected from a mineral oil and a synthetic oil. Above all, preferred is a base oil having a kinematic viscosity at 40°C of from 10 to 400 mm$^2$/sec, preferably from 20 to 250 mm$^2$/sec, more preferably from 40 to 150 mm$^2$/sec, for the purpose of evading noise generation in starting at low temperature and evading seizure to be caused by the difficulty in forming oily film at high temperature.

The mineral oil includes paraffinic mineral oil and naphthenic mineral oil; and especially preferred are those purified through suitable combination of reduced-pressure distillation, oil deasphalting, solvent extraction, hydro-cracking, solvent dewaxing, sulfuric acid washing, white clay purification and hydro-refining.

The synthetic oil includes hydrocarbon oils, aromatic oils, ester oils, ether oils. The hydrocarbon oils include poly-α-olefins or their hydrides such as normal paraffin, isoparaffin, polybutene, polyisobutylene, 1-decene oligomer, 1-decene/ethylene oligomer. The aromatic oils include alkylbenzenes such as monoalkylbenzenes, dialkylbenzenes; and alkylnaphthalenes such as monoalkylnaphthalenes, dialkylnaphthalenes, polyalkylnaphthalenes. The ester oils include diester oils such as dibutyl sebacate, di-2-ethylhexyl sebacate, dioctyl adipate, diisodecyl adipate, ditridecyl adipate, ditridecyl glutarate, methyl acetylcinnolate; aromatic ester oils such as trioctyl trimellitate, tridecyl trimellitate, tetraoctyl pyromellitate; polyol ester oils such as trimethylolpropane caprylate, trimethylolpropane pelargonate, pentaerythritol 2-ethylhexanoate, pentaerythritol pelargonate; complex ester oil, oligoester of polyalcohol and mixed fatty acid of dibasic acid/monobasic acid. The ether oils include polyglycols such as polyethylene glycol, polypropylene glycol, polyethylene glycol monoether, polypropylene glycol monoether; phenyl ether oils such as monoalkyltriphenyl ether, alkyldiphenyl ether, dialkyldiphenyl ether, pentaphenyl ether, tetraphenyl ether, monoalkyltetraphenyl ether, dialkyltetraphenyl ether. Other synthetic oil-type lubricant oils are tricresyl phosphate, silicone oil, perfluoroalkyl ether. One or more these base oils may be used herein either singly or as combined; and they are specifically controlled to have the preferred kinematic viscosity as mentioned above.

For the thickener, usable are organic and inorganic thickeners; but in consideration of their influence on the environment, preferred are those not containing a heavy metal. For example, herein usable are metal soaps such as lithium soap, calcium soap, aluminium soap, magnesium soap, sodium soap, and their composite soaps, urea compounds, bentonite, silica, carbon black. Above all, preferred are metal composite soaps and urea compounds. In consideration of their heat resistance and sound characteristic, urea compounds are more preferred, and diurea compounds are even more preferred. These may be used either singly or as combined.

Not limited, the amount of the thickener may be any one capable of forming and maintaining a grease along with the above-mentioned base oil. Preferably, it is from 5 to 40 % by mass of the overall grease amount. When the amount of the thickener is less than 5 % by mass, then it could hardly maintain the grease property, and when it is more than 40 % by mass, then the grease may be too hard to fully exhibit a lubricated condition, and such is unfavorable.

(First Waterproof Grease Composition)

The first waterproof grease composition comprises a surfactant as the waterproofness-imparting agent, as added to the base grease. As the surfactant, usable is any of anionic surfactant, cationic surfactant, ampholytic surfactant and nonionic surfactant, and it amount varies depending on the type of the surfactant. Owing to the existence of the surfactant therein, water mixed in the composition may be uniformly dispersed in the grease as fine droplets having a size of 20 $\mu$m or so, and therefore an oily film may be well kept on a lubricated site and its lubrication performance may be stably kept as such for a long period of time. However, the ability of nonionic surfactant to catch water is not enough, and therefore the grease could not take water therein as fine droplets. Accordingly, the amount of the surfactant to be added must be specifically controlled.

The anionic surfactant includes alkylsulfate ester salts, polyoxyethylene alkylether sulfate ester salts, alkylbenzenesulfonate salts, alkylnaphthalenesulfonic acids, alkylsulfonesuccinic acids, fatty acid salts, naphthalenesulfonic acid/formalin condensates; the cationic surfactant includes alkylamine salts, quaternary ammonium salts; the ampholytic surfactant includes alkylbetaines, alkylamine oxides. The amount of the surfactant to be added is from 0.1 to 10 % by mass of the overall grease amount. When the amount is less that 0.1 % by mass, then the grease could not take water as fine droplets therein, and even when it is more than 10 % by mass, the increase could not produce any additional effect but rather the amount of the base oil may be thereby relatively decreased to lower the lubrication performance. Taking these into consideration, the amount of the surfactant to be added is preferably from 0.5 to 5 % by mass.

The nonionic surfactant includes polyoxyethylene alkyl ethers, sorbitan fatty acid esters, glycerin fatty acid esters, polyoxyethylene-hardened castor oil. Its amount to be added is from 0.3 to 10 % by mass of the overall grease amount, preferably from 0.5 to 5 % by mass.

When a nonionic surfactant is added to the composition, then the kinematic viscosity of the base oil at 40°C is preferably from 20 to 250 mm$^2$/sec, more preferably from 90 to 185 mm$^2$/sec.

(Second Waterproof Grease Composition)

The second waterproof grease composition comprises at least one of metal soap, fluorine-containing water repellent and silicone-type water repellent as the waterproofness-imparting agent, as added to the base grease. The adhesiveness of the grease composition increases owing to the wax or polymer therein, and even when water is mixed in the composition, the composition is prevented from flowing out from the lubricated site and the lubricative film may be kept in a good condition for a long period of time. The metal soap includes aluminium stearate, calcium stearate, zinc stearate, magnesium stearate; and calcium stearate is preferred. The fluorine-containing water repellent includes polytetrafluoroethylene resin, perfluoropolyether oil. The silicone-type water repellent includes dimethylsilicone oil.

The amount of the water repellent to be added is from 0.1 to 20 % by mass of the overall grease amount. When the amount of the water repellent is less than 0.1 % by mass, then the water repellency is unsatisfactory and the composition could not prevent water from being mixed therein and would produce peeling. Even when the amount of the water repellent added is more than 20 % by mass, it could not produce any additional effect and it is uneconomical, and in addition, the base oil amount may be relatively decreased to worsen the lubricating property of the composition. Taking these into consideration, the amount of the water repellent is preferably from 5 to 15 % by mass.

(Third Waterproof Grease Composition)

The third waterproof grease composition comprises a pH-controlling agent as the waterproofness-imparting agent, as added to the base grease to thereby control the pH of the composition to be from 7 to 10. Having the pH level, the grease composition may prevent the mixed water from generating hydrogen ions and therefore may prevent peeling. Not limited, the pH-controlling agent may be any one capable of making the grease have the pH level. Preferred for it are sulfonates, phenates, phosphonates and succinimides, from which a desired one may be selected so as to attain the intended pH level.

The amount of the pH-controlling agent to be added is from 0.1 to 10 % by mass of the overall grease amount. When the amount of the pH-controlling agent is less than 0.1 % by mass, then the composition could not have the above-mentioned pH, but when it is more than 10 % by mass, then the basicity of the composition is too high and may cause corrosion. In addition, the amount of the base oil may be relatively decreased to worsen the lubricating property of the composition. Taking these into consideration, the amount of the pH-controlling agent is preferably from 0.5 to 5 % by mass.

(Fourth Waterproof Grease Composition)

The fourth waterproof grease composition comprises a wax or polymer as the waterproofness-imparting agent, as added to the base grease. The wax and polymer are not limited. As the wax, preferably used are montan wax (e.g.,

acid wax, ester wax, partially saponified wax), polyolefinwax (e.g., polyethylene wax, polyethylene oxide wax, polypropylene wax), fine powdery wax (e.g., polyethylene-type, polyethylene oxide-type, polypropylene-type, amide-modified, fluorine-modified), amide-type wax. As the polymer, preferably used are polyethylene-type, polypropylene-type, polystyrene-type, polyamide-type, polyimide-type and polyester-type polymers. As the polymer, also usable are polyalkyl methacrylate, polyisobutylene, olefin polymer and star-shaped polymer that are known as a viscosity index improver.

The amount of the wax or polymer to be added is from 0.1 to 10 % by mass of the overall grease amount. When the amount is less than 0.1 % by mass, then it will be ineffective for increasing the adhesive power of the composition, and even when it is more than 10 % by mass, the increase could not produce any additional effect but rather the grease may be thereby too hard and the amount of the base oil may be relatively decreased to lower the lubrication performance. Taking these into consideration, the amount to be added is preferably from 0.5 to 5 % by mass.

(Fifth Waterproof Grease Composition)

The fifth waterproof grease composition comprises graphite as the waterproofness-imparting agent, as added to the base grease. Graphite makes the grease composition conductive, therefore retarding the electrolysis of the mixed water, whereby hydrogen ions are prevented from being generated and white structure peeling hardly occurs. The type of graphite is not specifically defined, and various types of graphite such as flaky graphite or soil-like graphite are usable. One or more such different types of graphite may be used either singly or as combined. However, flaky and soil-like graphite (amorphous graphite) is the most preferred, and therefore, when two types of graphite are combined and used, then it is desirable that one of them is flaky or soil-like graphite. Soil-like graphite may be readily ground to have a reduced particle size, and therefore it facilitates accurate control of its content, and may be used at a low cost. On the other hand, flaky graphite has excellent lubricating capability. Any of natural or artificial graphite may be used herein with no problem. Natural graphite is preferably one obtained by purifying and grinding the graphite deposited in naturally-produced metamorphic rock (crystallized limestone or geniss). Artificial graphite is preferably one obtained by shaping pitch, coke or tar, then firing it at about 1200°C and graphitizing it at 2000 to 3000°C.

The amount of graphite to be added is from 1 to 20 % by mass of the overall grease amount. When the amount is less than 1 % by mass, then the conductivity of the grease composition may be unsatisfactory and the composition could not have sufficient peeling resistance. On the other hand, even when the amount is more than 20 % by mass, the peeling resistance could not increase any more and the effect may be saturated, the cost may increase. Taking these into consideration, the amount is preferably from 5 to 15 % by mass.

In the fifth waterproof grease composition, the kinematic viscosity of the base oil at 40°C is more preferably from 70 to 250 $mm^2$/sec. When it is less than 70 $mm^2$/sec (40°C), then the peeling resistance of the composition may lower when water is mixed therein; and when it is more than 250 $mm^2$/sec (40°C), then the torque may increase.

Various additive may be optionally added to the first to fifth waterproof grease compositions for further improving various properties of the composition. Especially preferred additives are antioxidant, rust-proofing agent, oil improver, extreme pressure agent, metal inactivator. As the antioxidant, preferred are amine compounds, phenol compounds, sulfur compounds, zinc dithiophosphate. Examples of the amine-type antioxidant are phenyl-1-naphthylamine, phenyl-2-naphthylamine, diphenylamine, phenylenediamine, oleylamidamine, phenothiazine. Examples of the phenol-type antioxidant are hindered phenols such as p-t-butylphenyl salicylate, 2,6-di-t-butyl p-phenylphenol, 2,2'-methylenebis(4-methyl-6-t-butylphenol), 4,4'-butylidenebis(6-t-butyl-m-cresol), tetrakis[methylene-3-(3',5'-di-t-butyl-4'-hydroxyphenyl) pr opionate]methane, 1,3,5-trimethyl-2,4,6-tris(3,5-di-t-butyl-4-hydroxybenzyl) benzene, n-octadecyl β-(4'-hydroxy-3',5'-di-t-butylphenyl)propionate, 2-n-octyl-thio-4,6-di(4'-hydroxy-3',5'-di-t-butyl)phenoxy-1,3,5-triazine, 4,4'-thiobis[6-t-butyl-m-cresol], 2-(2'-hydroxy-3'-t-butyl-5'-methylphenyl)-5-chlorobenzotri azole.

As the rust-proofing agent, preferred are esters. The esters include partial esters of polybasic carboxylic acid and polyalcohol, for example, sorbitan esters such as sorbitan monolaurate, sorbitan tristearate, sorbitan monooleate, sorbitan trioleate; alkyl esters such as polyoxyethylene laurate, polyoxyethylene oleate, polyoxyethylene stearate.

The oil improver includes fatty acids such as oleic acid, stearic acid; alcohols such as lauryl alcohol, oleyl alcohol; amines such as stearylamine, cetylamine; phosphates such as tricresyl phosphate; animal and vegetable oils.

The extreme pressure agent includes phosphorus compounds, zinc dithiophosphate, organic molybdenum compounds.

The metal inactivator includes benzotriazole, benzimidazole, indole, methylbenzotriazole.

One or more these additives may be added either singly or as combined. The additive amount is not limited so far as it is within a range not detracting the effect of the invention. Preferably, the amount is from 0.1 to 20 % by mass of the overall grease amount. When the amount is less than 0.1 % by mass, then the effect of the additive is poor; but even when the amount is more than 20 % by mass, the increase could not produce any additional effect but rather the amount of the base oil may be thereby relatively decreased to lower the lubrication performance.

When a nonionic surfactant is used in the first waterproof grease composition, then it is desirable to add a metal inactivator as the additive thereto. A metal inactivator may form a passivate film on the metal surface of a bearing, and when water invades into the film, it may prevent the formation of a water film on the metal surface thereby improving the peeling resistance of the composition. For sufficiently expressing the effect, the amount of the metal inactivator to be added is at least 0.5 % by mass of the overall grease amount. However, even when the amount is more than 10 % by mass, the increase could not produce any additional effect but rather the amount of the base oil may be thereby relatively decreased to lower the lubrication performance.

The method for preparing grease is not specifically defined. For example, a thickener is reacted in a base oil to prepare a base grease, then a predetermined amount of a waterproofness-imparting agent is added to it, and thereafter this is well kneaded and uniformly dispersed with a kneader or a roll mill. During the treatment, heating the system may be effective. It is desirable that the other additives are added along with the waterproofness-imparting agent in view of the process of preparing the grease composition. Preferably, the consistency of the obtained grease is NLGI No. 1 to 3.

The waterproof grease composition of the inventions have excellent waterproofness owing to the action of the waterproofness-imparting agent therein. Accordingly, the waterproof grease composition of the invention may make the site or apparatus to which it is applied, have excellent waterproofness; and it is especially favorably applied to a site or apparatus that may be brought into contact with water. Accordingly, the invention also provides a wheel-supporting roller bearing that contains the above-mentioned waterproof grease composition of the invention, as sealed therein.

(Wheel-Supporting Roller Bearing)

The wheel-supporting roller bearing is not specifically defined in point of the type and the structure of itself. For example, its one example is a hub unit as in Fig. 1, and the above-mentioned waterproof grease composition of the invention may be sealed therein. Not limited, the amount of the grease to be sealed in the device may be suitably from 30 to 50 % by volume of the inner space to be formed by the inner ring element 1, the outer ring 8 and the rolling element 11. When the sealed amount is less than 30 % by volume, then the durability of the device may be insufficient owing to lubrication insufficiency; but when it is more than 50 % by volume, then the grease composition may leak out.

EXAMPLES

The invention is further described with reference to the following Examples and Comparative Examples, to which, however, the invention should not be limited.

<Test-1: for first waterproof grease composition>

An amine-mixed mineral oil is added to and reacted with a diisocyanate-mixed mineral oil, and stirred under heat to prepare a urea-type base grease. After gradually cooled, a surfactant is added to it (its amount is 1 % by mass of the overall grease amount in every case), as in Table 1, and stirred and defoamed to obtain a test grease. The consistency of the test grease is specifically controlled to be NLGI No. 1 to 3. Every test grease is tested according to a wet shell roll test mentioned below.

Wet Shell Roll Test:

50 g of a test grease and 10 g of ion-exchanged water are put into a shell roll tester, and subjected to a wet shell roll test at a revolution of 165 rpm and at a temperature of 40°C for 2 hours. During this, the particle size of water in the grease is measured with an optical microscope. The results are shown in Table 1. In addition, photographic pictures of the condition of water in grease are in Fig. 2 to Fig. 6.

[Table 1]

Table 1

| | Grease A | Grease B | Grease C | Grease D | Grease E |
|---|---|---|---|---|---|
| Surfactant | A | B | C | - | D |
| Added Amount (mas%) | 1 | 1 | 1 | - | 1 |
| Particle Size of Water Droplets ($\mu$m) | at most 20 | at most 20 | at most 20 | 5 to 60 | 25 to 60 |
| Notes)<br>A: anionic surfactant (alkylbenzenesulfonate salt)<br>B: cationic surfactant (quaternary ammonium salt)<br>C: ampholytic surfactant (alkylbetaine)<br>D: nonionic surfactant (polyoxyethylene alkyl ether) | | | | | |

From Table 1 and Figs. 2 to 6, it is understood that the test grease A with an anionic surfactant added thereto, the test grease B with a cationic surfactant added thereto and the test grease C with an ampholytic surfactant added thereto all could take water as fine droplets having a particle size of at most 20 μm and the water droplets are uniformly dispersed in them. As opposed to these, in the test grease E with a nonionic surfactant added thereto, the water droplets are large as a whole (having a diameter of from 25 to 60 μm), and their dispersion condition is poor. On the other hand, in the test grease D with no surfactant, small water droplets and large water droplets exist together and their dispersion condition is bad.

Formulated as in Table 2, test greases are prepared. The consistency of the test greases is specifically controlled to be NLGI No. 1 to 3. Every test grease is tested according to a bearing peeling test mentioned below.

Bearing Peeling Test:

A test grease is sealed in a tapered roller bearing by NSK Ltd. (HR32017 (inner diameter 85 mm, outer diameter 130 mm, width 29 mm)), and the bearing is continuously rotated for 100 hours under a radial load of 35.8 kN and an axial load of 15.7 kN and at a revolution of 1500 rpm, with water being sealed in it from the outside at a rate of 1 % by mass/sec. After thus rotated, the bearing is dismantled and checked for the occurrence of peeling therein. The results are shown in Table 2.

[Table 2]

Table 2

| | | Grease F | Grease G | Grease H | Grease I | Grease J | Grease K |
|---|---|---|---|---|---|---|---|
| Thickener | | Li composite soap | urea | urea | Li composite soap | urea | urea |
| Base Oil | | mineral oil | mineral oil | poly-$\alpha$-olefin | mineral oil | mineral oil | mineral oil |
| Kinematic Viscosity of Base Oil (mm$^2$/sec@ 40°C) | | 130 | 100 | 80 | 130 | 130 | 130 |
| Metal Inactivator | type | benzotriazole | benzotriazole | benzotriazole | benzotriazole | benzotriazole | benzotriazole |
| | added amount (mas%) | 0.5 | 5.0 | 10.0 | 0.2 | 0.2 | 3.0 |
| Surfactant | type | E | F | G | F | F | F |
| | added amount (mas%) | 1.0 | 1.0 | 1.0 | 0.1 | 1.0 | 0.1 |
| Result of Peeling Test | | not peeled | not peeled | not peeled | peeled | peeled | peeled |
| Notes) E: anionic surfactant (dialkylsulfonesuccinic acid) F: nonionic surfactant (polyoxyethylene lauryl ether) G: nonionic surfactant (sorbitan monooleate) | | | | | | | |

From Table 2, it is understood that the test greases F to H, to which at least 0.1 % by mass of an anionic surfactant or nonionic surfactant and at least 0.5 % by mass of a metal inactivator are added, have excellent peeling resistance. As opposed to these, it is understood that, when the amount of the anionic surfactant or nonionic surfactant is less than 0.1% by mass or when the amount of the metal inactivator is less than 0.5 % by mass, then the samples could not have sufficient peeling resistance.

<Test-2: for second waterproof grease composition>

Formulated as in Table 3, test greases are prepared. To every test grease, added are phenylnaphthylamine (Vanderbit's "Vanlube 81") as an antioxidant and zinc naphthenate (Nippon Chemical Industry's "Naphthex Zinc") as a rust-proofing agent, each in an amount of 1.0 % by weight of the overall grease amount. Every test grease is tested according to a bearing waterproofness test mentioned below.

Bearing Waterproofness Test:

A test grease is sealed in a tapered roller bearing by NSK Ltd. (HR32017 (inner diameter 85 mm, outer diameter 130 mm, width 29 mm)), and the bearing is continuously rotated for 100 hours under a radial load of 35.8 kN and an axial load of 15.7 kN and at a revolution of 1500 rpm, with water being sealed in it from the outside at a rate of 1 % by mass/sec. After thus rotated, the bearing is dismantled and checked for the occurrence of peeling therein. In addition, the water content and the consistency of the test grease are measured. The results are shown in Table 3.
[Table 3]

Table 3

| | | Example 1 | Example 2 | Example 3 | Example 4 | Comparative Example 1 | Comparative Example 2 |
|---|---|---|---|---|---|---|---|
| Thickener | diurea | 12 | 12 | 13 | | 15 | |
| | lithium composite soap | | | | 12 | | 12 |
| Base Oil | mineral oil | 80 | 40 | 60 | 80 | 83 | 43 |
| | poly-$\alpha$-olefin oil | | 35 | 20 | | | 40 |
| | kinematic viscosity | 98.3 | 97.6 | 108.3 | 98.3 | 98.3 | 98.5 |
| Water Repellent | PTFE | 6 | | | | | |
| | fluorine-containing oil | | 11 | | | | |
| | silicone oil | | | | 6 | | |
| | calcium stearate | | | 5 | | | |
| Antioxidant | | 1 | 1 | 1 | 1 | 1 | 1 |
| Rust-Proofing Agent | | 1 | 1 | 1 | 1 | 1 | 1 |
| Mixture Consistency | | 280 | 277 | 275 | 270 | 279 | 265 |

(continued)

| | | Example 1 | Example 2 | Example 3 | Example 4 | Comparative Example 1 | Comparative Example 2 |
|---|---|---|---|---|---|---|---|
| Bearing Waterproofness Test | Peeling | no | no | no | no | yes | yes |
| | Water Content of Grease | 800 ppm | 960 ppm | 1380 ppm | 1160 ppm | 8500 ppm | immeasurable |
| | Mixture Consistency | 303 | 300 | 295 | 305 | 367 | grease softened |

Note 1) unit of constitutive ingredient: % by mass.
Note 2) diurea: reaction product of 4,4'-diphenylmethane diisocyanate and stearylamine
Note 3) lithium composite soap: lithium composite soap of 12-hydroxystearic acid/azelaic acid = 75 % by mass/25 % by mass.
Note 4) mineral oil: having a kinematic viscosity at 40°C of 98.3 $mm^2$/sec.
Note 5) poly-$\alpha$-olefin oil: having a kinematic viscosity at 40°C of 98.7 $mm^2$/sec.
Note 6) fluorine-containing oil: perfluoropolyether oil (having a kinematic viscosity at 40°C of 95 $mm^2$/sec).
Note 7) silicone oil: dimethylsilicone oil (having a kinematic viscosity at 40°C of 100 $mm^2$/sec).
Note 8) calcium stearate: by Sakai Chemical.
Note 9) antioxidant: Vanlube 81 by Vanderbit.
Note 10) rust-proofing agent: Nippon Chemical Industry's Naphthex Zinc.
Note 11) kinematic viscosity of base oil: kinematic viscosity at 40°C, unit $mm^2$/sec.

As shown in Table 3, when a test grease, to which a water repellent is added according to the invention, is sealed in, then the water penetration may be reduced and the peeling may be inhibited, and the roller bearing may have a long life.

<Test-3: for third waterproof grease composition>

An amine-mixed mineral oil is added to and reacted with a diisocyanate-mixed mineral oil, and stirred under heat to prepare a urea-type base grease. After gradually cooled, various pH-controlling agents are added to it, and stirred and defoamed to obtain test greases having pH 2, pH 4, pH 6, pH 7, pH 8, pH 9 or pH 10. In every test grease, the amount of the pH-controlling agent added is 1 % by mass of the overall grease amount. The consistency of every test grease is specifically controlled to be NLGI No. 1 to 3. Every test grease is tested according to a bearing waterproofness test mentioned below.

Bearing Waterproofness Test:

Each test grease is sealed in a tapered roller bearing by NSK Ltd. (HR32017 (inner diameter 85 mm, outer diameter 130 mm, width 29 mm)), and the bearing is continuously rotated under a radial load of 35.8 kN and an axial load of 15.7 kN and at a revolution of 1500 rpm, while water is introduced into the bearing from the outside at a rate of 20 mL/hr. The rotation is continued for 100 hours, and when the test bearing vibrated during the rotation time, then it is considered to mean peeling occurrence, and the rotation is stopped. When the bearing did not vibrate in 100 hours after the start of the rotation, then it is considered to mean peeling absence, and the rotation is stopped. Every test piece is tested 10 times, and the peeling possibility is computed according to the following formula:

$$\text{Peeling Possibility (\%)} = (\text{number of peeled samples/number of tested samples}) \times 100.$$

The results are graphed in Fig. 7, which indicates that, when a test grease having a pH of from 7 to 10 is sealed in, then it may effectively prevent peeling occurrence.

<Test-4: for fourth waterproof grease composition>

An amine-mixed mineral oil is added to and reacted with a diisocyanate-mixed mineral oil, and stirred under heat to prepare a urea-type base grease. After gradually cooled, wax (Clariat's "LTCOWAX PE130") or polymer (Lubrizol's "Lubrizol 7070H") is added to it in an amount of 2 % by mass of the overall grease amount, as in Table 4, and stirred and defoamed to obtain test greases of Examples.
For comparison, prepared are a test grease of the above urea-type base polymer alone (Comparative Example 1), and test greases produced by adding the same wax (Comparative Example 2) or polymer (Comparative Example 3) as that in Examples to a grease including, as a thickener, lithium soap obtained through saponification of fatty acid and lithium hydroxide. The mixture consistency of every test grease is specifically controlled to be NLGI No. 1 to 3.
50 g of a test grease and 10 g of ion-exchanged water are put into a shell roll tester, and subjected to a wet shell roll test at a revolution of 165 rpm and at a temperature of 40°C for 2 hours. The difference in the apparent viscosity before and after the test (apparent viscosity change) is obtained. The results are shown in Table 4.
[Table 4]

Table 4

| | | Example 1 | Example 2 | Comparative Example 1 | Comparative Example 2 | Comparative Example 3 |
|---|---|---|---|---|---|---|
| Base Grease | urea grease | 98 | 98 | 100 | | |
| | lithium soap grease | | | | 98 | 98 |
| Wax | | 2 | | | 2 | |
| Polymer | | | 2 | | | 2 |
| Apparent Viscosity before wet shell roll test (1/sec) | | 25 | 23 | 8.5 | 10.5 | 9.4 |
| Apparent Viscosity after wet shell roll test (1/sec) | | 16 | 15 | 3.1 | 3.1 | 2.9 |
| Apparent Viscosity Change (%) | | 36 | 35 | 64 | 71 | 70 |
| Note) The constitutive ingredient is % by mass. | | | | | | |

As in Table 4, the apparent viscosity of the urea grease, to which neither wax nor polymer is added, and the grease including lithium soap as a thickener and containing wax or polymer added thereto greatly lowered, but as opposed to these, the reduction in the apparent viscosity of the grease of the invention, as prepared by adding wax or polymer to the urea grease, is small; and it is understood that the grease of the invention may keep its adhesiveness even in the presence of water.

<Test-5: for fifth waterproof grease composition>

Test greases are prepared, each having the composition as in Table 5. The test greases of Examples 1 to 4 each comprise a base oil including, as the essential ingredient thereof, at least one of mineral oil and poly-α-olefin oil; a thickener including diurea or lithium composite soap; and graphite, further containing antioxidant and rust-proofing agent as additives. The test greases of Comparative Examples 1 to 3 are the same as the test greases of Examples 1 to 4 in that the former comprise a base oil including, as the essential ingredient thereof, at least one of mineral oil and poly-α-olefin oil, and a thickener that comprises diurea or lithium composite soap, further containing antioxidant and rust-proofing agent as additives; but they differ in that Comparative Example 1 does not contain graphite, and that Comparative Example 2 contains carbon black in place of graphite. Comparative Example 3 differs in that the amount of graphite therein is larger than the preferred range thereof and the amount of the base oil is smaller than the preferred range thereof. The mineral oil, poly-α-olefin oil, diurea, lithium composite soap, graphite, carbon black, antioxidant and rust-proofing agent used herein are mentioned below.

Mineral oil: having a kinematic viscosity at 40°C of 98. 3 mm$^2$/sec.
Poly-α-olefin oil: having a kinematic viscosity at 40°C of 98.7 mm$^2$/sec.
Diurea: obtained through reaction of 4,4'-diphenylmethane diisocyanate and stearylamine.
Lithium composite soap: lithium composite soap of 12-hydroxystearic acid/azelaic acid in a ratio of 75/25 by mass.
Graphite: CB150 by Nippon Graphite Industry.
Carbon black: Ketchen Black EC by Lion-Akzo.
Antioxidant: Vanderbilt's Vanlube 81.
Rust-proofing agent: Nippon Chemical Industry's Naphthex Zinc

Each test grease is sealed in a tapered roller bearing by NSK Ltd. (Bearing Number, HR32017, inner diameter 85 mm, outer diameter 130 mm, width 29 mm), and the bearing is rotated under a radial load of 35.8 kN and an axial load of 15.7 kN and at a revolution of 1500 rpm. During this, water is continuously injected into the inner space of the bearing, in an amount of 1 % by mass of the sealed grease per second, and the rotation test is carried out under the condition. The time taken before the occurrence of peeling in the bearing is counted. However, when no peeling occurred after 300 hours in the rotation test, the test is stopped.
The test results are shown in Table 5. The bearing including the test grease of Examples 1 to 4, as sealed therein, hardly peeled even when used in an environment where water could enter it, and its life is long, as compared with the bearing including the test grease of Comparative Example 1 or Comparative Example 2, as sealed therein. In Comparative Example 3, the amount of the base oil in the test grease is small, and the sample could not be greasy but is powdery.
[Table 5]

Table 5

| | Example 1 | Example 2 | Example 3 | Example 4 | Comparative Example 1 | Comparative Example 2 | Comparative Example 3 |
|---|---|---|---|---|---|---|---|
| Mineral Oil | 76 | 40 | 60 | 76 | 83 | 53 | 48 |
| Poly-$\alpha$-Olefin Oil | - | 34 | 17 | - | - | 28 | - |
| Diurea | 12 | 12 | 13 | - | 15 | - | 15 |
| Lithium Composite Soap | - | - | - | 12 | - | 12 | - |
| Graphite | 10 | 12 | 8 | 10 | - | - | 35 |
| Carbon Black | - | - | - | - | - | 5 | - |
| Antioxidant | 1 | 1 | 1 | 1 | 1 | 1 | 1 |
| Rust-Proofing Agent | 1 | 1 | 1 | 1 | 1 | 1 | 1 |
| Consistency | | | | | 279 | 265 | - |
| Peeling Time (hr) | 300 or more | 300 or more | 300 or more | 300 or more | 57 | 180 | - |
| *) The unit of the numeral except the consistency and the peeling time is % by mass. | | | | | | | |

In these Examples, a tapered roller bearing is used in the rotation test. However, the above-mentioned test grease compositions have the same effect also for other various types of roller bearings. For example, they are effective for radial roller bearings such as deep groove ball bearings, angular ball bearings, self-aligning ball bearings, cylindrical roller bearings, needle roller bearings, self-aligning roller bearings; and thrust-type roller bearings such as thrust ball bearings, thrust roller bearings.

While the invention is described in detail and with reference to specific embodiments thereof, it will be apparent to one skilled in the art that various changes and modifications can be made therein without departing from the spirit and scope thereof.

This application is based upon a Japanese patent application filed on October 18, 2004 (No. 2004-303000), a Japanese patent application filed on October 18, 2004 (No. 2004-303249), a Japanese patent application filed on October 18, 2004 (No. 2004-302805), a Japanese patent application filed on October 18, 2004 (No. 2004-302841) and a Japanese patent application filed on October 19, 2004 (No. 2004-304599); the contents of which are incorporated herein by reference.

**Claims**

1.  A waterproof grease composition comprising:

      a base oil that comprises at least one of mineral oil and synthetic oil and has a kinematic viscosity of from 10 to 400 $mm^2$/sec at 40°C,
      a thickener, and
      a waterproofness-imparting agent to be added.

2.  The waterproof grease composition as claimed in claim 1, wherein
    a surfactant is added as the waterproofness-imparting agent.

3.  The waterproof grease composition as claimed in claim 2, wherein
    at least one of cationic surfactant, anionic surfactant and ampholytic surfactant is added in a ratio of from 0.1 to 10 % by mass of the overall amount of the grease, or
    a nonionic surfactant is added in a ratio of from 0.3 to 10 % by mass of the overall amount of the grease.

4.  The waterproof grease composition as claimed in claim 1, wherein
    at lest one of metal soap, fluorine-containing water repellent and silicone-type water repellent is added as the waterproofness-imparting agent, in a ratio of from 0.1 to 20 % by mass of the overall amount of the grease.

5.  The waterproof grease composition as claimed in claim 1, wherein
    a pH-controlling agent is added as the waterproofness-imparting agent, in a ratio of from 0.1 to 10 % by mass of the overall amount of the grease.

6.  The waterproof grease composition as claimed in claim 6, having a pH of from 7 to 10.

7.  The waterproof grease composition as claimed in claim 1, wherein
    a wax or polymer is added as the waterproofness-imparting agent, in a ratio of from 0.1 to 10 % by mass of the overall amount of the grease.

8.  The waterproof grease composition as claimed in claim 1, wherein
    graphite is added as the waterproofness-imparting agent, in a ratio of from 1 to 20 % by mass of the overall amount of the grease.

9.  The waterproof grease composition as claimed in any one of claims 1 to 8, wherein
    the thickener is a urea compound.

10. A wheel-supporting roller bearing comprising:

      an inner member having a raceway surface in the outer peripheral surface thereof,
      an outer member having, in the inner peripheral surface thereof, a raceway surface that faces the raceway surface of the inner member and disposed outside the inner member, and

plural rolling elements rollably disposed between the two raceway surfaces, wherein the waterproof grease composition of any one of claims 1 to 9 is sealed therein.

**11.** The wheel-supporting roller bearing as claimed in claim 10, which is a hub unit.

# FIG. 1

## FIG. 2

GREASE A

## FIG. 3

GREASE B

## FIG. 4

GREASE C

## FIG. 5

GREASE D

# FIG. 6

GREASE E

# FIG. 7

## INTERNATIONAL SEARCH REPORT

| International application No. |
| --- |
| PCT/JP2005/019143 |

A. CLASSIFICATION OF SUBJECT MATTER
*C10M171/00*(2006.01), *C10M125/02*(2006.01), *C10M29/28*(2006.01),
*C10M147/00*(2006.01), *C10M155/02*(2006.01), *C10M159/06*(2006.01),
*C10M169/06*(2006.01), *B60B35/18*(2006.01), *F16C33/66*(2006.01),
According to International Patent Classification (IPC) or to both national classification and IPC

B. FIELDS SEARCHED

Minimum documentation searched (classification system followed by classification symbols)
C10M171/00-171/06, 115/08, 125/02, 129/28-129/46, 147/00-147/04,
155/02, 159/06, 169/06, C10N20/00-20/02, 30/00, 30/06, 40/02, 50/10,
B60B35/18, F16C33/66

Documentation searched other than minimum documentation to the extent that such documents are included in the fields searched
Jitsuyo Shinan Koho          1922-1996     Jitsuyo Shinan Toroku Koho    1996-2005
Kokai Jitsuyo Shinan Koho    1971-2005     Toroku Jitsuyo Shinan Koho    1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2003-301190 A (NSK Ltd.),<br>21 October, 2003 (21.10.03),<br>& JP 2003-193080 A    & JP 2003-193081 A<br>& JP 2004-83797 A    & JP 2004-83798 A<br>& US 2003/0176298 A1 | 1,4-6,9-11 |
| X | JP 59-131698 A (Kabushiki Kaisha Nihon )<br>Koyu),<br>28 July, 1984 (28.07.84),<br>(Family: none) | 1,4,10-11 |
| X | JP 57-111395 A (Kyodo Yushi Co., Ltd.),<br>10 July, 1982 (10.07.82),<br>(Family: none) | 1-3,5-6 |

☒ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>10 January, 2006 (10.01.06) | Date of mailing of the international search report<br>17 January, 2006 (17.01.06) |
| --- | --- |
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2005/019143 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | JP 2004-269789 A  (NSK Ltd.),<br>30 September, 2004 (30.09.04),<br>(Family: none) | 1,4-8 |
| X | JP 60-149696 A  (Idemitsu Kosan Co., Ltd.),<br>07 August, 1985 (07.08.85),<br>(Family: none) | 1,4 |
| X | JP 3-31394 A  (Nihon Sekiyu Kako Kabushiki<br>Kaisha),<br>12 February, 1991 (12.02.91),<br>(Family: none) | 1,5-6,9 |
| X | JP 60-11591 A  (Kyodo Yushi Co., Ltd.),<br>21 January, 1985 (21.01.85),<br>(Family: none) | 1,7,9 |
| X | JP 7-11276 A  (Exxon Research and Engineering<br>Co.),<br>13 January, 1995 (13.01.95),<br>& CA 2124497 A1         & EP 629689 A2<br>& FI 9402724 A          & NO 9402146 A | 1,7,9 |
| X | JP 4-46997 A  (Showa Shell Sekiyu<br>Kabushiki Kaisha),<br>17 February, 1992 (17.02.92),<br>(Family: none) | 1,7,9 |
| X | JP 3-70797 A  (Exxon Research and<br>Engineering Co.),<br>26 March, 1991 (26.03.91),<br>& CA 2019452 A1         & DE 69003887 T2<br>& EP 405893 A2          & ES 2045814 T3<br>& US 5110490 A | 1,7 |
| X | JP 48-19604 A  (Texaco Development Corp.),<br>12 March, 1973 (12.03.73),<br>(Family: none) | 1,7 |

Form PCT/ISA/210 (continuation of second sheet) (April 2005)

**INTERNATIONAL SEARCH REPORT**

| International application No. |
| --- |
| PCT/JP2005/019143 |

Continuation of A. CLASSIFICATION OF SUBJECT MATTER
  (International Patent Classification (IPC))

*C10M115*(2006.01), *C10N20/00*(2006.01), *C10N20/02*(2006.01), *C10N30/00*(2006.01), *C10N30/06*(2006.01), *C10N40/02*(2006.01), *C10N50/10*(2006.01)

(According to International Patent Classification (IPC) or to both national classification and IPC)

Form PCT/ISA/210 (extra sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008639 B
- JP 2878749 B
- JP 6803565 A
- JP 9169989 A
- JP 3026717 B
- JP 2559158 B
- JP 3035091 A
- JP 3173747 A
- JP 4244624 A
- JP 2004303000 A
- JP 2004303249 A
- JP 2004302805 A
- JP 2004302841 A
- JP 2004304599 A

**Non-patent literature cited in the description**

- **KYOZABURO KOMURA ; SHINICHI SHIROTA ; KIYOSHI HIRAKAWA.** Regarding rolling fatigue at surface starting point and inner starting point. *NSK Bearing Journal,* 1977, 1-10
- **P. SCHATZBERG ; I. M. FELSEN.** Effects of water and oxygen during rolling contact lubrication. *Wear,* 1968, vol. 12, 331-342